# EUROPÄISCHE PATENTSCHRIFT

(11) **EP 2 148 986 B1**
(45) Veröffentlichungstag und Bekanntmachung des Hinweises auf die Patenterteilung: **26.10.2011**
(21) Anmeldenummer: 08734663.1
(22) Anmeldetag: 19.03.2008
(51) Int. Cl.: F04B 7/00, F16K 11/052

(54) **PUMPE**
PUMP
POMPE

(30) Priorität: 21.05.2007 DE 102007023799
(43) Veröffentlichungstag der Anmeldung: 03.02.2010
(73) Patentinhaber: KNF FLODOS AG, 6210 Sursee (CH)
(72) Erfinder: KAUFMANN, Stephan, CH-6222 Gunzwil (CH); BUCHER, Michael, CH-6247 Schötz (CH)
(74) Vertreter: Maucher, Wolfgang
(86) Internationale Anmeldenummer: PCT/EP2008/002183
(87) Internationale Veröffentlichungsnummer: WO 2008/141690

(56) Entgegenhaltungen:
- EP-A- 0 933 569
- WO-A-97/10902
- DE-A1- 19 854 620
- US-A- 2 526 212
- US-A- 3 694 112
- US-A- 4 213 298

## Beschreibung

Die Erfindung bezieht sich auf eine Pumpe mit einem Pumpenkopf, in dem ein Einlassventil und ein Auslassventil angeordnet und einerseits mit einem Arbeitsraum und andererseits mit einem Sauganschluss und einem Druckanschluss verbunden sind und zwischen den Ein- und Auslassventilen und Pumpen-Saug/Druckanschlüssen ein Umschaltventil zum Umschalten der Förderrichtung angeordnet ist.

Oszillierende Pumpen mit druckbetätigten Ventilen sind bekannt und haben sich wegen ihres einfachen und robusten Aufbaus bewährt. Bei diesen Pumpen ist jeweils die Saugund Druckseite mit einem differenzdruckbetätigten Ventil, also Einlass- und Auslassventil versehen, welche je eine vorgegebene Durchflussrichtung erlauben und in die Gegenrichtung den Durchfluss sperren. Somit ist die Förderrichtung durch den Einbau der beiden druckbetätigten Ventile vorgegeben. Hingegen ist die Förderrichtung unabhängig von der Drehrichtung des Pumpenantriebs.

Für bestimmte Anwendungen ist es erwünscht, die Förderrichtung umschalten zu können, damit die Pumpe beispielsweise ein austrittsseitiges Gefäß und die Leitungen wieder entleeren kann.

Zu diesem Zweck kann an die Saug- und Druckanschlüsse ein Ventil angeschlossen werden, welches diese beiden Anschlüsse hydraulisch über Kreuz umschaltet.

Eine solche Pumpe ist beispielsweise aus der internationalen Patentanmeldung WO 97/10902 (nächster Stand der Technik) bekannt. Die Pumpe weist zum Umschalten der Förderrichtung ein außerhalb des Pumpengehäuses liegendes Drehschieberventil mit vier Flüssigkeitsanschlüssen auf, die durch einen drehbaren Ventilrotor paarweise über kreuz miteinander verbindbar sind. Der Ventilrotor führt beim Umschalten jedoch eine in Bezug auf die Ventilraum-Innenwand gleitende Bewegung aus, durch die Abrieb und Verschleiß auftreten kann. Die Abdichtung des Ventils, insbesondere des Außen liegenden Betätigungshebels, ist schwierig und aufwändig.

Solche bekannten Ventile genügen in der Regel auch nicht den durch die damit verbundene, vorzugsweise als Membranpumpe ausgebildete Pumpe vorgegebenen Eigenschaften insbesondere bezüglich der chemischen Beständigkeit, einer hermetischen Abdichtung, der Art der Dichtung, der Trockenlaufsicherheit, der Eisdruckfestigkeit und dergleichen. Außerdem sind solche separaten Ventile konstruktiv aufwändig, da mehr Bauelemente erforderlich sind und dadurch diese Ventile größer bauen. Auch hinsichtlich der hydraulischen Verbindung und Abdichtung zwischen der Pumpe und dem Ventil ist mehr Aufwand erforderlich, unter anderem auch, weil zusätzliche Abdichtungen zwischen den Ein- und Auslassventilen sowie dem Umschaltventil erforderlich sind.

Aus der EP 0 933 569 A2 ist ein Wippenventil mit pneumatischer Vorsteuerung bekannt, das ein Gehäuse mit Druckmittelanschlüssen umfasst, in welchem Gehäuse eine zwischen zwei Endstellungen um eine Achse bewegliche und mit zumindest einer Dichtfläche für zwei über eine Drossel miteinander verbundene Druckmittelanschlüsse zusammenwirkenden Wippe eingesetzt ist, wobei ein Schenkel der Wippe über einen Vorsteueranschluss mit einem Vorsteuerdruck beaufschlagbar ist und die Wippe in einer Endstellung einen Druckmittelanschluss mit dem Versorgungsdruckanschluss und in der anderen Endstellung den anderen Druckmittelanschluss mit einem Entlüftungsanschluss verbindet.

Aus der US 2 526 212 A ist eine Vakuum-Melkvorrichtung bekannt, bei welcher eine Pumpe mit einem Pumpenkopf vorgesehen ist, in welchem ein Einlassventil und ein Auslassventil angeordnet und einerseits mit einem Arbeitsrahmen und andererseits mit einem Sauganschluss und einem Druckanschluss verbunden sind, wobei ein Umschaltventil zum Umschalten der Förderrichtung vorgesehen ist.

Aus der US 4 213 298 A ist eine hydraulische Steuerung für den Schaft einer Doppelmembranpumpe bekannt.

Aus der US 3 694 112 ist eine Pumpe bekannt, bei der ein Ventilkörper oszilliert, um das für den Pumpvorgang erforderliche Öffnen und Schließen der Pumpenanschlüsse zu bewirken.

Aus der DE 198 54 620 A1 ist eine Ventileinrichtung bekannt, die zur Bildung eines Verstärkers ein als Schaltwippe ausgeführtes Schaltelement enthält, wobei an den beidseits des Schwenkbereichs der Schaltwippe liegenden Wippenarmen jeweils eine über einen Steuerkanal durch einen niedrigen Steuerdruck beaufschlagte Betätigungsmembran angreift und jeweils eine einer Kanalmündung, welche für Fluidströme hohen Druckes und hohen Durchsatzes vorgesehen ist, zugeordnete Verschlusspartie ausgebildet ist.

Aufgabe der vorliegenden Erfindung ist es, eine Pumpe der eingangs erwähnten Art zu schaffen, die problemlos in ihrer Förderrichtung umschaltbar ist, wobei aber trotzdem der einfache und robuste Aufbau erhalten bleibt.

Diese Aufgabe wird bei einer Pumpe der eingangs genannten Art durch die Merkmale des Anspruchs 1 gelöst. Das Umschaltventil ist also insbesondere Teil des Pumpenkopfs und in diesen integriert.

Dadurch ist kein umständliches, externes Anschließen des Umschaltventils an die Saug- und Druckanschlüsse erforderlich und außerdem ergeben sich dadurch kurze, strömungsgünstige Anschlussverbindungen.

Ein besonders einfacher und kompakter Aufbau des erfindungsgemäßen Umschaltventils ist durch die Ausbildung des Umschaltventils als Wippenventil mit einer Wippe und beidseits einer Wippenlagerung befindlichen Wippenteilen gegeben. Dabei bilden die Wippenteile Ventilkörper zum Verschließen von Fluidanschlüssen des Umschaltventils.

Diese Ausführungsform hat unter anderem den Vorteil, dass keine gleitenden Teile im Fluidbereich vorhanden sind, so dass dementsprechend kein Abrieb und keine Verunreinigung des Fördermediums auftreten können. Es sind auch keine Gleitdichtungen vom Fluidbereich nach außen vorhanden. Daher ist das Umschaltventil auch geeignet für Lösungen, Säuren, Laugen,

Suspensionen und dergleichen Fördermedien. Bei Einsatz von Gleitdichtungen würde der Fluidfilm unter der Dichtung austrocknen und die verbleibenden Feststoffe würden die Dichtung beschädigen und zu deren frühzeitigem Ausfall führen.

Nach einer bevorzugten Ausführungsform weist das Umschaltventil zwei nebeneinander angeordnete, voneinander getrennte Kammern auf, die jeweils drei Fluidanschlüsse haben, von denen jeweils zwei wechselweise durch die Wippenteile verschließbar sind. Dabei sind von den drei Fluidanschlüssen der einen Kammer des Umschaltventils einer mit dem Ventil-Sauganschluss des Einlassventils und die beiden anderen, wechselweise durch das in dieser Kammer befindliche Wippenteil verschließbaren Fluidanschlüsse mit Pumpen- Saug/Druck-Anschlüssen verbunden, wobei von den drei Fluidanschlüssen der anderen Kammer einer mit dem Ventil-Druckanschluss des Auslassventils und die beiden anderen, verschließbaren mit den Pumpen- Saug/Druck-Anschlüssen verbunden sind und wobei die Pumpen- Saug/Druck-Anschlüsse in Abhängigkeit der Umschaltventil-Stellung wechselweise einen Pumpen-Druckanschluss oder einen Pumpen-Sauganschluss bilden.

Die jeweils gleichzeitig verschlossenen oder geöffneten Fluidanschlüsse beider Kammern sind dabei an unterschiedliche Pumpen- Saug/Druck-Anschlüsse angeschlossen.

Somit bildet einer der beiden Saug/Druck-Anschlüsse in der einen Stellung des Umschaltventils einen Pumpen-Sauganschluss und der andere Saug/Druck-Anschluss einen Pumpen-Druckanschluss, während in der anderen Stellung des Umschaltventils der Pumpen-Sauganschluss zum Pumpen-Druckanschluss und der Pumpen-Druckanschluss zum Pumpen-Sauganschluss wird.

Vorzugsweise ist eine Trennwand zwischen den beiden Kammern als Wippenlagerung ausgebildet.

Dabei sind insbesondere die Trennwand und die Wippenlagerung zumindest bereichsweise elastisch ausgebildet, wobei die Wippe eine nach außen geführte, abgedichtete Fortsetzung als äußere Angriffsstelle zum Betätigen der Ventilwippe aufweist.

Damit lässt sich die Wippe von außen bewegen, beispielsweise mechanisch ansteuern, wobei die Bewegung durch elastische Verformung im Bereich der Wippenlagerung ermöglicht ist, so dass ein Mechanismus mit Gleitdichtung vermieden werden kann.

Nach einer Weiterbildung der Erfindung weist das Umschaltventil einen Wippenkern aus vergleichsweise steifem Material, beispielsweise Metall sowie eine zumindest bereichsweise Umhüllung des Wippenkerns aus weichelastischem Material auf. Der aus steifem Material bestehende Wippenkern sorgt für eine ausreichende Stabilität der Wippe. Bevorzugt erstreckt sich dabei der Wippenkern durchgehend zumindest bis über die wechselweise durch die Wippenteile verschließbaren Fluidanschlüsse.

Ist die Umhüllung nur teilweise im Bereich der verschließbaren Fluidanschlüsse vorhanden, lassen sich die Werkstoff- und Herstellkosten reduzieren.

Bei nicht aggressiven Fördermedien oder aber, wenn der Wippenkern ausreichend beständig gegen das geförderte Fluid ist, ist diese Ausführungsform vorteilhaft.

Bevorzugt ist jedoch vorgesehen, dass der ganze Wippenkern von einem weichelastischen, beständigem Material umhüllt ist. Dadurch ist der ganze Wippenkern vor chemischem Angriff durch das Fluid geschützt.

Eine vorteilhafte Ausführungsform sieht vor, dass sich die Umhüllung des Wippenkerns aus weichelastischem Material in den Bereich der Trennwand erstreckt und diese bildet.

Dabei ist es besonders vorteilhaft, wenn die Ventil-Kammern und die dazwischen befindliche Trennwand eine umlaufende Abdichtwand aufweist, welche aus weichelastischem Material besteht und vorzugsweise einstückig mit der Trennwand und der Umhüllung des Wippenkerns verbunden ist.

Damit werden zusätzliche Verbindungsstellen vermieden und die Teilezahl wird reduziert.

Vorzugsweise besteht die Umhüllung des Wippenkerns aus einem vulkanisierten oder thermoplastischen Elastomer.

Insbesondere in Verbindung mit dem Merkmal, dass die von der Wippe verschließbaren Fluidanschlüsse des Umschaltventils mit Ventilsitzen versehen sind, wird so für eine zuverlässige Abdichtung der Ventilwippe auf den Ventilsitzen gesorgt. Insbesondere ist damit auch eine chemiebeständige und nach außen hermetisch dichte Ausführung möglich.

Erwähnt sei noch, dass die beiden Hälften der Wippe auch je als ein separates Teil einschließlich der jeweiligen Abdichtung ausgeführt sein können, die mittels außen liegender Mechanik parallel angesteuert sein können.

Nach einer Ausgestaltung der Erfindung kann die mit dem Ventil-Sauganschluss der Pumpe verbundene Kammer des Umschaltventils mit einer Schwingkammer verbunden sein.

Damit können Pulsationen in der Saugleitung bei oszillierenden Membranpumpen reduziert und Unterdruckspitzen vermieden werden. Phänomene wie Ausgasung und Kavitation werden dadurch verringert.

Weiterhin kann die mit dem Ventil-Druckanschluss der Pumpe verbundene Kammer des Umschaltventils mit einem Pulsationsdämpfer verbunden sein, um auslassseitige Pulsationen zu glätten.

Zweckmäßigerweise sind dabei die Schwingkammer und/oder der Pulsationsdämpfer in den Pumpenkopf integriert.

Zusätzliche Ausgestaltungen der Erfindung sind in den weiteren Unteransprüchen aufgeführt.

Nachstehend ist die Erfindung mit ihren wesentlichen Einzelheiten anhand der Zeichnungen noch näher erläutert.

### Es zeigt:

- Fig. 1: eine Längsschnittdarstellung einer teilweise dargestellten Membranpumpe mit einem Pumpenkopf und darin befindlichen Ein- und Auslassventilen sowie einem Umschaltventil,
- Fig. 2: eine etwa Fig.1 entsprechende Darstellung, hier jedoch mit dem Umschaltventil in der anderen Schaltposition sowie zusätzlich vorgesehener Schwingkammer und Pulsationsdämpfer,
- Fig. 3: eine perspektivische Darstellung eines Umschaltventils,
- Fig. 4: eine Querschnittdarstellung des Umschaltventils und
- Fig. 5: eine Aufsicht des Umschaltventils.

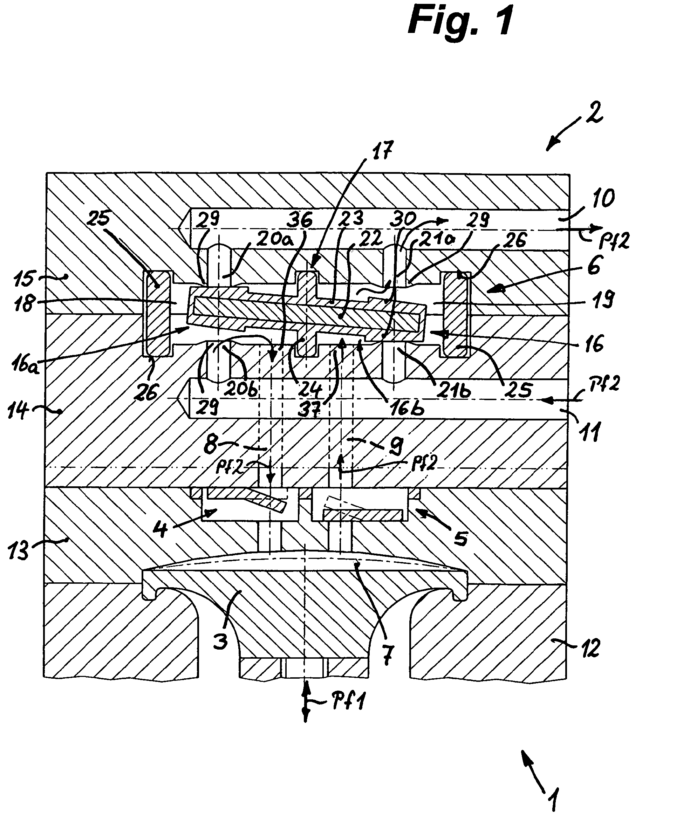

Von einer Membranpumpe 1 ist in Fig.1 der Bereich des Pumpenkopfes 2 in Längsschnittdarstellung gezeigt, wobei eine gemäß dem Doppelpfeil PF1 hin und her bewegbare Pumpen-Membrane 3, ein Einlassventil 4, ein Auslassventil 5 sowie ein Umschaltventil 6 erkennbar sind.

Die Pumpen-Membrane 3 begrenzt einen Arbeitsraum 7, der mit einem Einlass an das Einlassventil 4 und einem Auslass an das Auslassventil 5 angeschlossen ist. Die strichpunktierte Linie innerhalb des Arbeitsraumes 7 kennzeichnet etwa die Lage der Membrane in oberer Totpunktstellung.

Das Einlassventil 4 ist, dem Arbeitsraum 7 abgewandt, an einen Ventil-Sauganschluss 8 und das Auslassventil 5 an einem Ventil-Druckanschluss 9 angeschlossen. Der Sauganschluss 8 und der Druckanschluss 9 führen von den Ventilen 4, 5 zu dem Umschaltventil 6. Mit Hilfe des Umschaltventils 6 kann die Förderrichtung umgeschaltet werden.

Das Umschaltventil 6 ist an einem ersten Saug/Druck-Anschluss 10 sowie an einem zweiten Saug/Druck-Anschluss 11 angeschlossen. Je nach Stellung des Umschaltventils 6 bildet dabei der erste Anschluss 10 einen Sauganschluss und der Anschluss 11 einen Druckanschluss, während in der anderen Stellung des Umschaltventils der erste Anschluss 10 einen Druckanschluss bildet und der zweite Anschluss 11 einen Sauganschluss.

Im gezeigten Ausführungsbeispiel ist der Pumpenkopf im wesentlichen durch drei Platten mit den darin beziehungsweise dazwischen angeordneten Ventilen 4,5,6 aufgebaut, die auf das Pumpengehäuse 12 aufgesetzt sind. Als erstes befindet sich auf dem Pumpengehäuse 12 eine Zwischenplatte 13, an die sich eine Mittelplatte 14 anschließt. Zwischen diesen beiden Platten 13, 14 befinden sich die Ein- und Auslassventile 4,5. Auf die Mittelplatte 14 ist eine Anschlussplatte 15 aufgesetzt, zwischen der und der Mittelplatte 14 das Umschaltventil 6 eingesetzt ist.

Das Umschaltventil 6 zusammen mit der Mittelplatte 14 und der Anschlussplatte 15 bilden ein Wechselmodul, welches von dem übrigen Pumpenkopf abnehmbar und durch eine Abschlussplatte mit darin befindlichem Ventil-Saug-Anschluss 8 und Ventil-DruckAnschluss 9 ersetzt werden kann. Die Pumpe lässt sich so wahlweise mit oder ohne Umschaltventil auf einfache Weise umbauen und einsetzen.

Das Wechselmodul mit dem Umschaltventil 6 kann auch in Verbindung mit anderen Pumpen oder anderen Anwendungen separat eingesetzt werden.

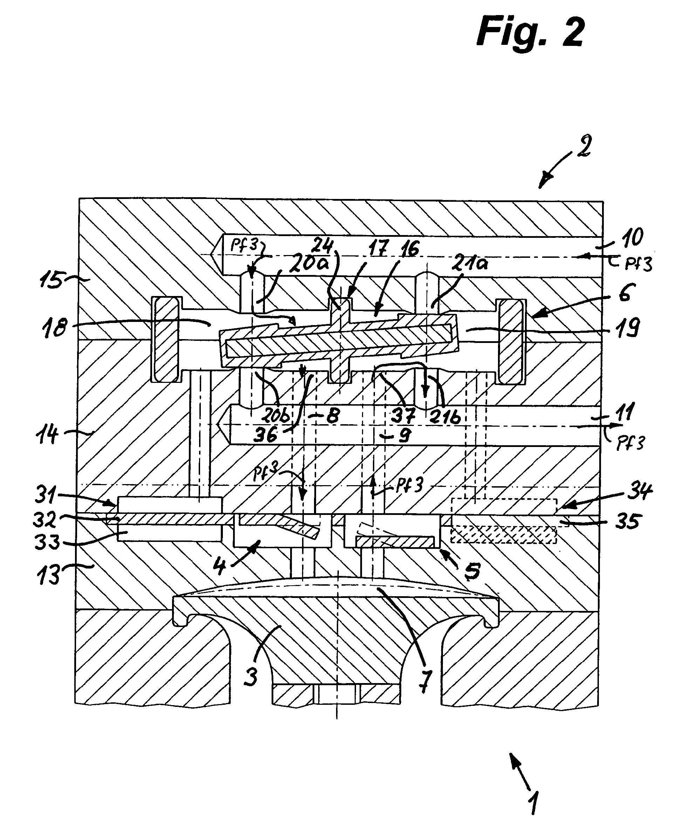

Das Umschaltventil 6 ist als Wippenventil mit einer Wippe 16 und beidseits einer Wippenlagerung 17 befindlichen Wippenteilen 16a, 16b ausgebildet. Wie gut insbesondere in Fig.1 und 2 erkennbar, weist das Umschaltventil 6 zwei nebeneinander angeordnete, voneinander getrennte Kammern 18,19 auf, die jeweils drei Fluidanschlüsse haben. Jeweils zwei der Fluidanschlüsse einer Kammer, nämlich die Fluidanschlüsse 20a, 20b der Kammer 18 sowie die Fluidanschlüsse 21a, 21b der Kammer 19 sind wechselweise durch die Wippenteile 16a,16b verschließbar. Die Wippenteile 16a,16b bilden dabei Ventilkörper.

Der dritte Fluidanschluss 36 der Kammer 18 ist an den Ventil-Saug-Anschluss 8 und der dritte Fluidanschluss 37 der Kammer 19 an das Ventil 9 angeschlossen. Jeweils gleichzeitig verschlossene oder gleichzeitig geöffnete Fluidanschlüsse 20a,21b; 20b,21a beider Kammern 18,19 sind an unterschiedliche Saug/Druck-Anschlüsse 11 angeschlossen.

Wie in Fig.1 und 2 erkennbar, ist der Fluidanschluss 20a der Kammer 18 und der Fluidanschluss 21a der Kammer 19 an den Saug/Druckanschluss 10 und der Fluidanschluss 20b der Kammer 18 und der Fluidanschluss 21b der Kammer 19 an den zweiten Saug/Druck-Anschluss 11 angeschlossen. In der Stellung des Umschaltventils 6 gemäß Fig.1 bildet der Anschluss 10 einen Druckanschluss während der Anschluss 11 einen Sauganschluss bildet. In der Stellung des Umschaltventils 6 gemäß Fig.2 ist die Förderrichtung umgedreht, so dass der Anschluss 10 den Saug-Anschluss und der Anschluss 11 den Druckanschluss bilden. Die jeweiligen Fluidströme sind in Fig.1 durch die Pfeile PF2 und in Fig.2 durch die Pfeile PF3 gekennzeichnet.

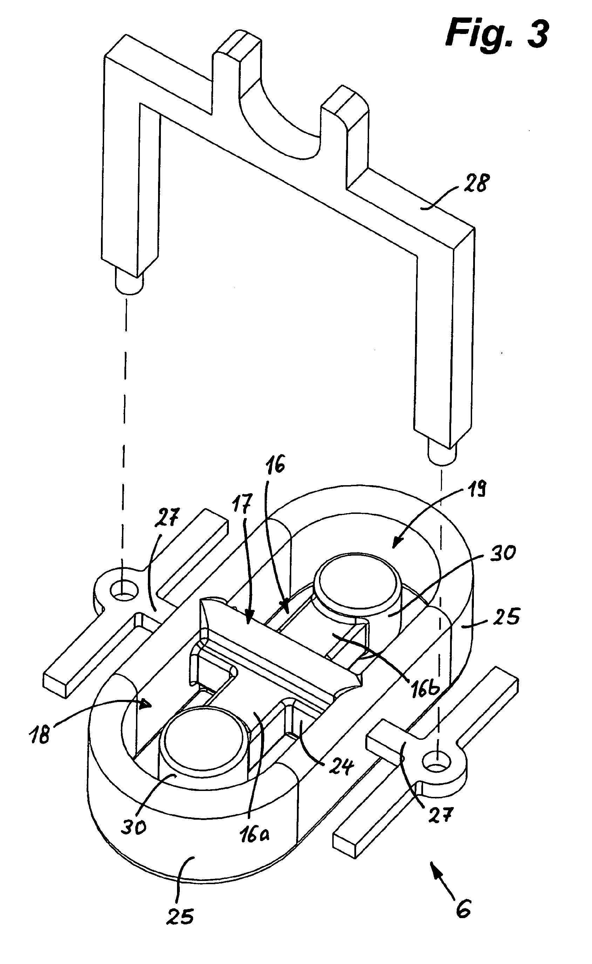

Das Umschaltventil 6 ist vorzugsweise als einstückige Einbaueinheit ausgebildet, wie dies gut in den Fig.3 bis 5 erkennbar ist. Das Umschaltventil 6 weist einen Wippenkern 22 beispielsweise aus Metall sowie eine Umhüllung 23 des Wippenkerns aus weichelastischem Material auf. Diese Umhüllung 23 bildet im Bereich der Wippenlagerung 17 eine Trennwand 24 zwischen den beiden Kammern 18,19. Die Wippe 16 und auch die Trennwand 24 sind von einer umlaufenden Abdichtwand 25 umgrenzt, die gleichzeitig auch die äußere Abgrenzung der beiden Kammern 18 und 19 bildet. Auch diese Abdichtwand 25 ist im Ausführungsbeispiel einstückig mit der Trennwand 24 sowie der Umhüllung 23 verbunden.

Wie bereits vorerwähnt, ist das Material für diese Teile elastisch, so dass einerseits die notwendigen Abdichtungen beim Einspannen zwischen der Anschlussplatte 15 und der Mittelplatte 14 im Bereich der Abdichtwand 25 und der Trennwand 24 gegeben ist und andererseits aber auch die Beweglichkeit der Wippe 16. Als weichelastisches Material kommen beispielsweise vulkanisierte Elastomere oder thermoplastische Elastomere in Frage.

Die Abdichtwand 25 ist ringförmig ausgebildet und liegt in Funktionsstellung (Fig.1 und 2) in Ringnuten 26 einerseits der Anschlussplatte 15 und andererseits der Mittelplatte 14 dichtend an. Die Kammern 18 und 19 sind dadurch jeweils durch einen Teil der Abdichtwand 25, die Trennwand 24 sowie die Mittelplatte 14 und die Anschlussplatte 15 begrenzt.

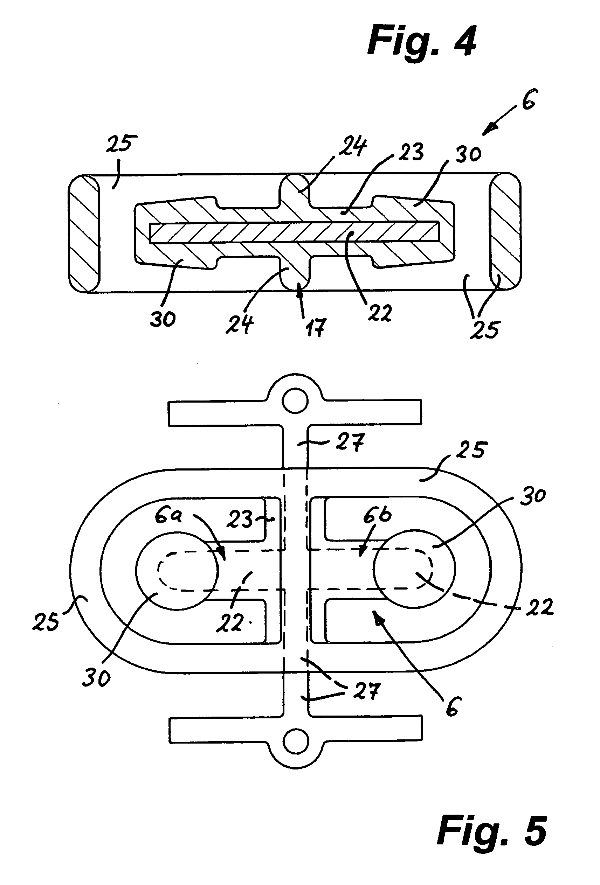

Der Wippenkern 22 weist im Bereich seiner Wippenlagerung 17 die Trennwand 24 und die Abdichtwand 25 nach außen durchgreifende Fortsetzungen 27 auf (vergleiche Fig.3 und 5) die als äußere Angriffsstellen zum Betätigen der Ventil-Wippe 16 dienen. Als Betätigungsantrieb für die Wippe 16 kann beispielsweise ein Elektro-Magnetantrieb vorgesehen sein. In Fig.3 ist ein Betätigungshebel 28 erkennbar, der mit den Fortsetzungen 27 verbindbar ist und an dem einerseits ein Hubmagnet zum Verstellen der Wippe in eine Schaltstellung angreift andererseits in die Gegenrichtung eine Rückstellfeder wirkt, welche die Wippe 16 in die andere Schaltstellung bewegt und hält. Die Feder kann derart dimensioniert oder einstellbar sein, dass eine Überdruckbegrenzung gebildet ist. Im einfachsten Fall kann zur Betätigung der Wippe 16 auch ein manuell betätigbarer, äußerer Handhebel vorgesehen sein.

Die beidseitig des Wippenkerns im Bereich der Wippenlagerung 17 nach außen geführten Fortsetzungen 27 können auch zur äußeren Lagerung der Wippe 16 dienen. Diese Lagerung kann auf äußeren Gehäuseteilen erfolgen.

Die Wippenteile 16a,16b weisen an ihren Enden mit den Ventilsitzen 29 der verschließbaren Fluidanschlüsse zusammenwirkende Anformungen 30 als Ventilkörper auf, die so geformt sind, dass in der jeweiligen Schräglage der Wippe 16 eine gute Abdichtung der jeweiligen Fluidanschlüsse gegeben ist. Die elastische Umhüllung 23 ist dazu bezüglich ihrer Schichtdicke etwas größer ausgebildet und die Anlagefläche entsprechend der Kipplage der Wippe schräg verlaufend angeordnet. Durch die größere Schichtdicke ist auch eine größere Nachgiebigkeit und damit eine bessere Dichtmöglichkeit gegeben.

In den gezeigten Ausführungsbeispielen weisen die verschließbaren Fluidanschlüsse 20a,20b,21a,21b gleich große Querschnitte auf. Es besteht aber auch die Möglichkeit, dass die mit dem Auslassventil 5 verbundene Kammer 19, verschließbare Fluidanschlüsse 21a,21b mit einem größeren Durchlassquerschnitt aufweist als die der verschließbaren Fluidanschlüsse 20a,2Qb der anderen Kammer 18, die mit dem Einlassventil 4 verbunden ist. Die dadurch auf die Wippe 16 einwirkenden Druckkräfte bewirken ein selbstverstärkendes Schließen und kleinere Ansteuerkräfte.

Wenn den verschließbaren Fluidanschlüssen 21a,21b mit dem größeren Durchlassquerschnitt eine Anformung 30 mit größerer Schichtdicke zugeordnet ist, als dem verschließbaren Fluidanschlüssen 20a,20b der anderen Kammer 18, kann ein Nachstellen der Wippe 16 bei einem Ausweichen des Lagerpunktes im Bereich der Wippenlagerung 17 erfolgen.

Die Stellkräfte, die von außen aufgebracht und auf die Wippe 16 übertragen werden, setzen sich zusammen aus Kräften für die Deformation im Bereich der elastischen Wippenlagerung 17, aus Druckkräften für das Verschließen der Ventilsitze sowie Kräften zum Anpressen auf die Ventilsitze mit einer gewissen Deformation der elastischen Umhüllung, was für eine zuverlässige Abdichtung erforderlich ist.

Da die Hauptkraftkomponenten nur im Bereich der Endlagen der Wippe 16 auftreten, sind für die Verstellansteuerung besondere Betätigungsmechaniken vorteilhaft, beispielsweise ein Exzenteroder Kniehebel-Mechanismus. Dadurch wird die Wippe in den jeweiligen Endpositionen mit geringem Kraftaufwand auch gegen große Druckkräfte gehalten beziehungsweise verriegelt. Der Selbsthemmungseffekt wird dadurch ausgenützt und ein Elektromagnet als Antrieb müsste nur im Moment der Betätigung bestromt werden und kann ansonsten ruhen, womit der durchschnittliche Energieaufwand sinkt.

Zur Reduktion einer Pulsation in der Saugleitung kann, wie in Fig.2 erkennbar, die mit dem Ventil-Saug-Anschluss 8 verbundene Kammer 18 des Umschaltventils 6 mit einer Schwingkammer 31 verbunden sein. Diese Schwingkammer weist ein durch eine Schwingmembrane 32 abgetrenntes Luftpolster 33 auf. Da die Schwingkammer 31 seitlich neben den Einlassventil 4 angeordnet ist, könnte eine einstückige Ausbildung der Schwingmembrane mit der Ventilplatte des Einlassventils vorgesehen sein. Bei einer anderen Anordnung im Bereich des Auslassventiles wäre dann eine Einstückigkeit mit der Ventilplatte des Auslassventils möglich. Weiterhin ist in dem Ausführungsbeispiel nach Fig.2 ein Pulsationsdämpfer 34 vorgesehen, der mit der Kammer 19 verbunden ist, welche an dem Ventil-Druckanschluss angeschlossen ist. Der Pulsationsdämpfer 34 weist eine Pulsationskammer mit einer Trennmembrane 35 auf, wobei die Trennmembrane durch ein volumen-kompressibles Material, zum Beispiel Schaumstoff abgestützt ist.

Sowohl die Schwingkammer 31 als auch der Pulsationsdämpfer 34 sind im Ausführungsbeispiel in dem Pumpenkopf 2 integriert.

Die Schwingmembrane 32 kann mit der benachbarten Ventilplatte des Einlassventils 4 einstückig verbunden sein. Analog gilt dies auch für die Trennmembrane 35 des Pulsationsdämpfers 34, wobei die Lage der Trennmembrane und der Ventilplatte des Auslassventils 5 relativ zueinander entsprechend ausgerichtet sind. Gegebenenfalls kann auch eine einstückig durchgehende Membran- und Ventilplatte für den Pulsationsdämpfer, die Schwingkammer und die Ein- und Auslassventile vorgesehen sein.

## Patentansprüche

1. Pumpe mit einem Pumpenkopf, in dem ein Einlassventil und ein Auslassventil angeordnet und einerseits mit einem Arbeitsraum (7) und andererseits mit einem Sauganschluss und einem Druckanschluss verbunden sind und zwischen den Ein- und Auslassventilen (4,5) und Pumpen- Saug/Druckanschlüssen (10,11) ein Umschaltventil (6) zum Umschalten der Förderrichtung angeordnet ist **dadurch gekennzeichnet, dass** das Umschaltventil (6) als Wippenventil mit einer Wippe (16) und beidseits einer Wippenlagerung (17) befindlichen Wippenteilen (16a,16b) ausgebildet ist, wobei das Umschaltventil (6) zwei nebeneinander angeordnete, voneinander getrennte Kammern (18,19) aufweist, die jeweils drei Fluidanschlüsse (20a,20b,36; 21a,21b,37) haben, von denen jeweils zwei (20a,20b; 21a,21b) wechselweise durch die Wippenteile (16a,16b) verschließbar sind.

2. Pumpe nach Anspruch 1, **dadurch gekennzeichnet, dass** das Umschaltventil (6) Teil des Pumpenkopfs (2) ist, vorzugsweise in diesen integriert ist **und/oder** dass die Wippenteile (16a,16b) Ventilkörper zum Verschließen von Fluidanschlüssen des Umschaltventils (6) bilden.

3. Pumpe nach Anspruch **1 oder 2**, **dadurch gekennzeichnet, dass** von den drei Fluidanschlüssen (20a,20b,36) der einen Kammer (18) des Umschaltventils (6) ein Fluidanschluss (36) mit dem Ventil-Sauganschluss (8) des Einlassventils (4) und die beiden anderen, wechselweise durch das in dieser Kammer befindliche Wippenteil verschließbaren Fluidanschlüsse (20a,20b) mit Pumpen-Saug/Druck-Anschlüssen (10,11) verbunden sind, dass von den drei Fluidanschlüssen (21a,21b,37) der anderen Kammer ein Fluidanschluss (37) mit dem Ventil-Druckanschluss (9) des Auslassventils (5) und die beiden anderen (21a, 21b) mit den Pumpen- Saug/Druck-Anschlüssen (10,11) verbunden sind und dass die Pumpen- Saug/DruckAnschlüsse (10,11) in Abhängigkeit der Umschaltventil-Stellung wechselweise einen Pumpen-Druckanschluss oder einen Pumpen-Sauganschluss bilden **und/oder** dass jeweils gleichzeitig verschlossene oder gleichzeitig geöffnete Fluidanschlüsse (20a,21b; 20b,21a) beider Kammern (18,19) an unterschiedliche Pumpen- Saug/Druck-Anschlüsse (10,11) angeschlossen sind.

4. Pumpe nach einem der Ansprüche 1 bis **3, dadurch gekennzeichnet, dass** die Wippenlagerung (17) als Trennwand (24) zwischen den beiden Kammern (18,19) ausgebildet ist, **insbesondere wobei** die Trennwand (24) und Wippenlagerung (17) zumindest bereichsweise elastisch ausgebildet sind und **wobei** die Wippe (16) eine nach außen geführte, abgedichtete Fortsetzung (27) als äußere Angriffsstelle zum Betätigen der Ventilwippe aufweist.

5. Pumpe nach einem der Ansprüche 1 bis **4, dadurch gekennzeichnet, dass** das Umschaltventil (6) einen Wippenkern (22) aus vergleichsweise steifem Material, beispielsweise Metall sowie eine zumindest bereichsweise Umhüllung (23) des Wippenkerns (22) aus weichelastischem Material aufweist **und/oder** dass sich der Wippenkern (22) durchgehend zumindest bis über die wechselweise durch die Wippenteile (16a,16b) verschließbaren Fluidanschlüsse (20a,20b,21a,21b) erstreckt.

6. Pumpe nach einem der Ansprüche 1 bis **5**, **dadurch gekennzeichnet, dass** sich das weichelastische Material, insbesondere die Umhüllung (23) des Wippenkerns (22) aus weichelastischem Material in den Bereich der Trennwand (24) erstreckt und diese bildet **und/oder** dass das weichelastische Material, insbesondere die Umhüllung (23) des Wippenkerns (22) aus einem vulkanisierten oder thermoplastischen Elastomer besteht **und/oder** dass die von der Wippe (16) verschließbaren Fluidanschlüsse (20a,20b, 21a,21b) des Umschaltventils (6) mit Ventilsitzen (29) versehen sind.

7. Pumpe nach einem der Ansprüche **1** bis **6**, **dadurch gekennzeichnet, dass** die Ventil-Kammern (18, 19) und die dazwischen befindliche Trennwand (24) von einer umlaufenden Abdichtwand (25) umgrenzt sind, **insbesondere wobei** die Abdichtwand (25) aus weichelastischem Material besteht und vorzugsweise einstückig mit der Trennwand (24) und der Umhüllung des Wippenkerns (22) verbunden ist.

8. Pumpe nach einem der Ansprüche 1 bis **7**, **dadurch gekennzeichnet, dass** der Wippenkern (22) im Bereich seiner Wippenlagerung (17) wenigstens eine, die Trennwand (24) und die Abdichtwand (25) nach außen durchgreifende Fortsetzung (27) aufweist als äußere Angriffsstelle zum Betätigen der Ventilwippe und/oder dass als Betätigungsmechanik zum Verstellen der Wippe (16) ein Excenter- oder Kniehebel-Mechanismus vorgesehen ist.

9. Pumpe nach einem der Ansprüche 1 bis **8**, **dadurch gekennzeichnet, dass** als Betätigungsantrieb für die Wippe (16) ein Elektro-Magnetantrieb vorgesehen ist.

10. Pumpe nach einem der Ansprüche 1 bis **9, dadurch gekennzeichnet, dass** die Wippe (16) durch Federkraft in einer Endlage gehalten ist und durch einen Betätigungsantrieb in die andere Endlage verstellbar ist, **insbesondere wobei** die Feder zum Halten der Wippe (16) in einer Endlage derart bemessen oder einstellbar ist, dass eine Überdruckbegrenzung gebildet ist.

11. Pumpe nach einem der Ansprüche 1 bis **10**, **dadurch gekennzeichnet, dass** zur Betätigung der Wippe (16) ein manuell betätigbarer Handhebel vorgesehen ist **und/oder** dass beidseitig des Wippenkerns im Bereich seiner Wippenlagerung (17) nach außen geführte, die Trennwand und die Abdichtwand nach außen durchgreifende Fortsetzungen (27) des Wippenkerns (22) vorgesehen sind, die zur äußeren Lagerung der Wippe (16) dienen **und/oder** dass die wechselweise durch die Wippenteile (16a,16b) verschließbaren Fluidanschlüsse (20a,20b,21a,21b) gleich große Querschnitte aufweisen.

12. Pumpe nach einem der Ansprüche 1 bis **11**, **dadurch gekennzeichnet, dass** die mit dem Auslassventil verbundene Kammer (19) des Umschaltventils (6), verschließbare Fluidanschlüsse (21a,21b) mit einem größeren Durchlassquerschnitt aufweist als die der verschließbaren Fluidanschlüsse (20a,20b) der anderen Kammer (18), **insbesondere wobei** den verschließbaren Fluidanschlüssen (21a,21b) mit dem größeren Durchlassquerschnitt eine Umhüllung (23) des Wippenkerns (22) mit größerer Schichtdicke zugeordnet ist als den verschließbaren Fluidanschlüsse (20a,20b) der anderen Kammer.

13. Pumpe nach einem der Ansprüche **1** bis **12**, **dadurch gekennzeichnet, dass** die mit dem Ventil-Sauganschluss (8) der Pumpe verbundene Kammer (18) des Umschaltventils (6) mit einer Schwingkammer (31) verbunden ist **und/oder** dass die mit dem Ventil-Druckanschluss (9) der Pumpe verbundene Kammer (19) des Umschaltventils (6) mit einem Pulsationsdämpfer (34) verbunden ist.

14. Pumpe nach **Anspruch 13**, **dadurch gekennzeichnet, dass** die Schwingkammer (31) und/oder der Pulsationsdämpfer (34) in den Pumpenkopf (2) integriert sind **und/oder** dass die Schwingmembrane (32) und/oder die Trennmembrane (35) einstückig mit wenigstens einer Einlassventil-Ventilplatte und/oder einer Auslass-Ventilplatte verbunden sind.

15. Pumpe nach einem der Ansprüche 1 bis **14**, **dadurch gekennzeichnet, dass** der Pumpenkopf (2) eine Zwischenplatte (13) mit den Ein- und Auslassventilen (4,5) sowie eine Mittelplatte (14) und eine Anschlussplatte (15) mit dazwischen befindlichem Umschaltventil (6) aufweist, **insbesondere wobei** das Umschaltventil (6) mit der Mittelplatte (14) und der Anschlussplatte (15) auswechselbar als Wechselmodul ausgebildet sind und **wobei** anstatt dieses Wechselmoduls eine Abschlussplatte auf die Zwischenplatte (13) aufsetzbar ist.

## Claims

1. Pump having a pump head, in which an inlet valve and an outlet valve are mounted and are connected on the one hand to a working chamber (7) and on the other hand to a intake connection and a compression connection, and between the inlet and outlet valves (4, 5) and pump intake/compression connections (10, 11) is provided a switching valve (6) for changing the direction of delivery, **characterised in that** the switching valve (6) is embodied as a rocker valve with a rocker (16) and rocker members (16a, 16b) located on either side of a rocker mounting (17), wherein the switching valve (6) comprises two chambers (18, 19) arranged side by side and separate from one another, each of which has three fluid connections (20a, 20b, 36; 21a, 21b. 37), of which two (20a, 20b; 21a, 21b) in each case may be alternately closed off by the rocker members (16a, 16b).

2. Pump according to claim 1, **characterised in that** the switching valve (6) is part of the pump head (2) and is preferably integrated therein, and/or that the rocker elements (16a, 16b) form valve members for closing off fluid connections of the switching valve (6).

3. Pump according to claim 1 or 2, **characterised in that** of the three fluid connections (20a, 20b, 36) of one chamber (18) of the switching valve (6), one fluid connection (36) is connected to the valve intake connection (8) of the inlet valve (4), and the other two fluid connections (20a, 20b) that can be alternately closed off by the rocker element located in this chamber are connected to pump intake/pressure connections (10, 11), **in that** of the three fluid connections (21a, 21b, 37) of the other chamber, one fluid connection (37) is connected to the valve compression connection (9) of the outlet valve (5), and the other two fluid connections (21a. 21b) are connected to the pump intake/pressure connections (10, 11), and **in that** depending on the position of the switching valve the pump intake/pressure connections (10, 11) alternately form a pump pressure connection or a pump intake connection, and/or **in that** fluid connections (20a, 21b; 20b, 21a) of the two chambers (18, 19) that are closed at the same time or openedat the same time are connected to different pump intake/compression connections (10, 11).

4. Pump according to one of claims 1 to 3, **characterised in that** the rocker mounting (17) is embodied as a dividing wall (24) between the two chambers (18, 19), and in particular the dividing wall (24) and the rocker mounting (17) are of elastic construction, at least in parts, and the rocker (16) comprises an outwardly guided, sealed off projection (27) as an external point of engagement for actuating the valve rocker.

5. Pump according to one of claims 1 to 4, **characterised in that** the switching valve (6) comprises a rocker core (22) of comparatively rigid material, for example metal, and an at least partial casing (23) of the rocker core (22) consisting of soft elastic material, and/or the rocker core (22) extends right through at least beyond the fluid connections (20a, 20b; 21a, 21b) that can be alternatively closed off by the rocker elements (16a, 16b).

6. Pump according to one of claims 1 to 5, **characterised in that** the soft elastic material, particularly the casing (23) of the rocker core (22) made of soft elastic material, extends into the region of the dividing wall (24) and forms said wall, and/or the soft elastic material, particularly the casing (23) of the rocker core (22) consists of a vulcanised or thermoplastic elastomer, and/or the fluid connections (20a, 20b; 21a, 21b) of the switching valve (6) that can be closed off by the rocker (16) are provided with valve seats (29).

7. Pump according to one of claims 1 to 6, **characterised in that** the valve chambers (18, 19) and the dividing wall (24) located between them are surrounded by an encircling sealing wall (25), while in particular the sealing wall (25) consists of soft elastic material and is preferably connected in one piece to the dividing wall (24) and the casing of the rocker core (22).

8. Pump according to one of claims 1 to 7, **characterised in that** the rocker core (22) comprises, in the region of its rocker mounting (17), at least one projection (27) extending outwards through the dividing wall (24) and the sealing wall (25) as an external point of engagement for actuating the valve rocker and/or **in that** an eccentric or bell-crank lever mechanism is provided as an actuating mechanism for moving the rocker (16).

9. Pump according to one of claims 1 to 8, **characterised in that** an electromagnetic drive is provided as the actuating drive for the rocker (16).

10. Pump according to one of claims 1 to 9, **characterised in that** the rocker (16) is held in an end position by spring force and is movable into the other end position by an actuating drive, while in particular the spring for holding the rocker (16) in an end position is of such dimensions or is adjustable such that an excess pressure limiter is formed.

11. Pump according to one of claims 1 to 10, **characterised in that**, for actuating the rocker (16), a manually operable hand lever is provided, and/or **in that** on both sides of the rocker core in the region of its rocker mounting (17) are provided outwardly guided projections (27) of the rocker core (22) that pass outwardly through the dividing wall and the sealing wall, which serve for the external mounting of the rocker (16), and/or **in that** the fluid connections (20a, 20b, 21a, 21b) that can be alternatively closed off by the rocker elements (16a, 16b) have cross-sections of the same size.

12. Pump according to one of claims 1 to 11, **characterised in that** the chamber (19) of the switching valve (6) that is connected to the outlet valve comprises closable fluid connections (21a, 21b) with a larger cross-section of passage than those of the closable fluid connections (20a, 20b) of the other chamber (18), while in particular the closable fluid connections (21a, 21b) with the larger cross-section of passage are associated with a casing (23) of the rocker core (22) with a greater layer thickness than are the closable fluid connections (20a, 20b) of the other chamber.

13. Pump according to one of claims 1 to 12, **characterised in that** the chamber (18) of the switching valve (6) that is connected to the valve intake connection (8) of the pump is connected to an oscillation chamber (31) and/or **in that** the chamber (19) of the switching valve (6) that is connected to the valve compression connection (9) of the pump is connected to a pulsation damper (34).

14. Pump according to claim 13, **characterised in that** the oscillation chamber (31) and/or the pulsation damper (34) is or are integrated in the pump head (2) and/or **in that** the oscillating membrane (32) and/or the separating membrane (35) are connected in one piece with at least one inlet valve plate and/or an outlet valve plate.

15. Pump according to one of claims 1 to 14, **characterised in that** the pump head (2) comprises an intermediate plate (13) with the inlet and outlet valves (4, 5) and a middle plate (14) and a connecting plate (15) with the switching valve (6) located between them, wherein in particular the switching valve (6) with the middle plate (14) and the connecting plate (15) are constructed to be replaceable as a replaceable module and instead of this replaceable module an end plate can be placed on the intermediate plate (13).

## Revendications

1. Pompe avec une tête de pompe, dans laquelle sont disposées une soupape d'admission et une soupape d'évacuation qui sont reliées d'un côté à une chambre de travail (7) et de l'autre côté à un raccord d'aspiration et à un raccord de refoulement, une soupape d'inversion (6) étant disposée entre les soupapes (4, 5) d'admission et d'évacuation et des raccords (10, 11) d'aspiration/refoulement de pompe, afin d'inverser le sens du débit, **caractérisée en ce que** la soupape d'inversion (6) est réalisée sous la forme d'une soupape à bascule avec une bascule (16) et des parties de bascule (16a, 16b) se trouvant de part et d'autre d'un palier de bascule (17), sachant que la soupape d'inversion (6) présente deux chambres (18, 19) disposées l'une à côté de l'autre et séparées l'une de l'autre, qui possèdent respectivement trois raccords fluidiques (20a, 20b, 36 ; 21a, 21b, 37), deux de ces raccords respectifs (20a, 20b ; 21a, 21b) pouvant être alternativement fermés par les parties de bascule (16a, 16b).

2. Pompe selon la revendication 1, **caractérisée en ce que** la soupape d'inversion (6) fait partie de la tête de pompe (2), de préférence est intégrée dans celle-ci, et/ou **en ce que** les parties de bascule (16a, 16b) forment des corps de soupape destinés à fermer les raccords fluidiques de la soupape d'inversion (6).

3. Pompe selon la revendication 1 ou 2, **caractérisée en ce que**, parmi les trois raccords fluidiques (20a, 20b, 36) de l'une (18) des chambres de la soupape d'inversion (6), un raccord fluidique (36) est relié au raccord d'aspiration de soupape (8) de la soupape d'admission (4) et les deux autres raccords fluidiques (20a, 20b), pouvant être alternativement fermés par la partie de bascule se trouvant dans cette chambre, sont reliés aux raccords (10, 11) d'aspiration/refoulement de pompe, **en ce que**, parmi les trois raccords fluidiques (21a, 21b, 37) de l'autre chambre, un raccord fluidique (37) est relié au raccord de refoulement de soupape (9) de la soupape d'évacuation (5) et les deux autres (21a, 21b) sont reliés aux raccords (10, 11) d'aspiration/refoulement de pompe, et **en ce que** les raccords (10, 11) d'aspiration/refoulement de pompe, en fonction de la position de la soupape d'inversion, forment alternativement un raccord de refoulement de pompe ou un raccord d'aspiration de pompe, et/ou **en ce que** des raccords fluidiques respectivement simultanément fermés ou simultanément ouverts (20a, 21b ; 20b, 21a) des deux chambres (18, 19) sont raccordés à des raccords différents (10,11) d'aspiration/refoulement de pompe.

4. Pompe selon l'une des revendications 1 à 3, **caractérisée en ce que** le palier de bascule (17) est réalisé sous forme de cloison de séparation (24) entre les deux chambres (18, 19), sachant notamment que la cloison de séparation (24) et le palier de bascule (17) sont réalisés au moins sectoriellement élastiques, et sachant que la bascule (16) présente un prolongement étanché (27), dirigé vers l'extérieur, comme point d'attaque extérieur pour l'actionnement de la bascule de soupape.

5. Pompe selon l'une des revendications 1 à 4, **caractérisée en ce que** la soupape d'inversion (6) présente une âme de bascule (22) en matériau relativement rigide, par exemple en métal, ainsi qu'un enrobage au moins sectoriel (23) de l'âme de bascule (22) en matériau souple et élastique, et/ou **en ce que** l'âme de bascule (22) s'étend continûment au moins jusqu'au-dessus des raccords fluidiques (20a, 20b, 21a, 21b) pouvant être alternativement fermés par les parties de bascule (16a, 16b).

6. Pompe selon l'une des revendications 1 à 5, **caractérisée en ce que** le matériau souple et élastique, en particulier l'enrobage (23) de l'âme de bascule (22) en matériau souple et élastique, s'étend dans la région de la cloison de séparation (24) et forme celle-ci, et/ou **en ce que** le matériau souple et élastique, en particulier l'enrobage (23) de l'âme de bascule (22), est constitué d'un élastomère vulcanisé ou thermoplastique, et/ou **en ce que** les raccords fluidiques (20a, 20b, 21a, 21b) de la soupape d'inversion (6) pouvant être fermés par la bascule (16) sont munis de sièges de soupape (29).

7. Pompe selon l'une des revendications 1 à 6, **caractérisée en ce que** les chambres de soupape (18, 19) et la cloison de séparation (24) qui se trouve entre elles sont circonscrites par une paroi d'étanchement entourante (25), sachant notamment que la paroi d'étanchement (25) est constituée d'un matériau souple et élastique et est reliée de préférence d'un seul tenant à la cloison de séparation (24) et à l'enrobage de l'âme de bascule (22).

8. Pompe selon l'une des revendications 1 à 7, **caractérisée en ce que** l'âme de bascule (22) présente, dans la région de son palier de bascule (17), au moins un prolongement (27) traversant la cloison de séparation (24) et la paroi d'étanchement (25) vers l'extérieur comme point d'attaque extérieur pour l'actionnement de la bascule de soupape, et/ou **en ce qu'**un mécanisme à excentrique ou à genouillère est prévu comme mécanisme d'actionnement pour le déplacement de la bascule (16).

9. Pompe selon l'une des revendications 1 à 8, **caractérisée en ce qu**'un entraînement électromagnétique est prévu comme entraînement pour l'actionnement de la bascule (16).

10. Pompe selon l'une des revendications 1 à 9, **caractérisée en ce que** la bascule (16) est maintenue par force de ressort dans une position finale et peut être déplacée dans l'autre position finale par un entraînement d'actionnement, sachant notamment que le ressort pour maintenir la bascule (16) dans une position finale est dimensionné ou réglable de telle sorte qu'une limitation de surpression est formée.

11. Pompe selon l'une des revendications 1 à 10, **caractérisée en ce qu**'un levier à main pouvant être actionné manuellement est prévu pour l'actionnement de la bascule (16), et/ou en ce que des prolongements (27) de l'âme de bascule (22), dirigés vers l'extérieur et traversant vers l'extérieur la cloison de séparation et la paroi d'étanchement, sont prévus de part et d'autre de l'âme de bascule dans la région de son palier de bascule (17), prolongements qui servent de paliers extérieurs pour la bascule (16), et/ou en ce que les raccords fluidiques (20a, 20b, 21a, 21b) pouvant être alternativement fermés par les parties de bascule (16a, 16b) présentent des sections de même taille.

12. Pompe selon l'une des revendications 1 à 11, **caractérisée en ce que** la chambre (19) de la soupape d'inversion (6) qui est reliée à la soupape d'évacuation présente des raccords fluidiques pouvant être fermés (21a, 21b) qui possèdent une plus grande section de passage que les raccords fluidiques pouvant être fermés (20a, 20b) de l'autre chambre (18), sachant notamment qu'on associe aux raccords fluidiques pouvant être fermés (21a, 21b) de plus grande section de passage un enrobage (23) de l'âme de bascule (22) de plus grande épaisseur de couche qu'aux raccords fluidiques pouvant être fermés (20a, 20b) de l'autre chambre.

13. Pompe selon l'une des revendications 1 à 12, **caractérisée en ce que** la chambre (18) de la soupape d'inversion (6) qui est reliée au raccord d'aspiration de soupape (8) de la pompe est reliée à une chambre d'oscillation (31), et/ou **en ce que** la chambre (19) de la soupape d'inversion (6) qui est reliée au raccord de refoulement de soupape (9) de la pompe est reliée à un amortisseur de pulsation (34).

14. Pompe selon la revendication 13, **caractérisée en ce que** la chambre d'oscillation (31) et/ou l'amortisseur de pulsation (34) sont intégrés dans la tête de pompe (2), et/ou en ce que la membrane oscillante (32) et/ou la membrane séparatrice (35) sont reliées d'un seul tenant à au moins une plaque de soupape d'admission et/ou une plaque de soupape d'évacuation.

15. Pompe selon l'une des revendications 1 à 14, **caractérisée en ce que** la tête de pompe (2) présente une plaque intermédiaire (13) avec les soupapes d'admission et d'évacuation (4, 5) ainsi qu'une plaque centrale (14) et une plaque de raccordement (15) avec la soupape d'inversion (6) entre elles, sachant notamment que la soupape d'inversion (6) avec la plaque centrale (14) et la plaque de raccordement (15) est réalisée amovible sous forme de module remplaçable, et sachant qu'au lieu de ce module remplaçable, on peut monter sur la plaque intermédiaire (13) une plaque de fermeture.
